(19)

Europäisches
Patentamt
European
Patent Office
Office européen
des brevets

(11) **EP 3 950 088 A1**

(12) **EUROPEAN PATENT APPLICATION**
published in accordance with Art. 153(4) EPC

(43) Date of publication:
**09.02.2022 Bulletin 2022/06**

(21) Application number: **20779728.3**

(22) Date of filing: **24.03.2020**

(51) International Patent Classification (IPC):
**B01D 39/16** (2006.01)   **B32B 5/26** (2006.01)
**B32B 27/02** (2006.01)   **B32B 27/32** (2006.01)
**D04H 1/4282** (2012.01)   **D04H 3/007** (2012.01)
**D04H 3/073** (2012.01)   **D04H 3/16** (2006.01)

(52) Cooperative Patent Classification (CPC):
**B01D 39/16; B32B 5/26; B32B 27/02; B32B 27/32;
D04H 1/4282; D04H 3/007; D04H 3/073; D04H 3/16**

(86) International application number:
**PCT/JP2020/013004**

(87) International publication number:
**WO 2020/196515 (01.10.2020 Gazette 2020/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.03.2019 JP 2019064342**

(71) Applicants:
• **JNC Corporation
Chiyoda-ku
Tokyo 100-8105 (JP)**
• **JNC FILTER CO., LTD.
Osaka-shi
Osaka 530-6108 (JP)**

(72) Inventors:
• **MINEO Ryota
Moriyama-shi, Shiga 524-0001 (JP)**
• **NISHIHARA Hisato
Moriyama-shi, Shiga 524-0001 (JP)**
• **YAMAGUCHI Osamu
Moriyama-shi, Shiga 524-0001 (JP)**
• **KANARI Kazuki
Moriyama-shi, Shiga 524-0001 (JP)**

(74) Representative: **Becker, Eberhard
Becker & Kurig Partnerschaft
Patentanwälte PartmbB
Bavariastrasse 7
80336 München (DE)**

(54) **DEPTH FILTER**

(57)    The present invention addresses the problem of providing a filter that exhibits good precision of filtration even of fluids containing a high concentration of fine powder particles having high viscosity, and that has excellent pressure resistance for enabling filtration over a long period of time. This depth filter comprises a substrate layer, a filtration layer, and a skin layer in this order. The substrate layer and the skin layer are layers obtained by winding and thermally fusing a nonwoven cloth configured from fibers having an average fiber diameter of 150 μm or more. The filtration layer is a layer obtained by winding a layered body two or more times, the layered body containing at least a net and a nonwoven cloth included only in the filtration layer. The average fiber diameter of the nonwoven cloth constituting the substrate layer and the average fiber diameter of the nonwoven cloth constituting the skin layer are larger than the average fiber diameter of the nonwoven cloth included only in the filtration layer.

FIG. 1

**Description**

[Technical Field]

The present invention relates to a depth filter for filtering a fluid containing fine particles.

[Background Art]

As a fluid containing fine particles, there is slurry or a gel-like fluid containing powders. As a specific example of the slurry, slurry of a lithium secondary battery material is known. In the slurry of the lithium secondary battery material, for the purpose of shortening drying time after filtration and reducing a condensation amount of a volatilized liquid, concentration is increasing.

In the related art, a filter is used to filter solids from such slurry and purify the slurry. However, as the concentration of the slurry increases, viscosity of the slurry increases, and interaction between the powders contained in the slurry grows stronger, which makes filtration by a filter difficult. It is known that, for example, when a cartridge filter for water is used for filtering slurry, even if each powder contained in the slurry is smaller than an average pore diameter of the filter, aggregation (bridge) of the powder particles occurs when powder particles pass through the filter, and thus an appearance particle diameter increases, which causes clogging. This is called a rush phenomenon.

Patent Literature 1 proposes a filter which can solve a problem that precision of filtration changes depending on a differential pressure in filtration of a viscous fluid, that is, a filter life is shortened, and can capture a soft gel-like solid substance even if a pulse pressure or a high differential pressure occurs. In the invention of Patent Literature 1, a main filtration layer of a filter has a first main filtration layer which is thermally fused to have a porosity of 50% to 80% and a second main filtration layer which is not thermally fused to have a porosity of 80% or more, and a second main filtration nonwoven cloth is configured such that a porosity thereof is 1.2 times or more that of a first main filtration nonwoven cloth.

Further, a nonwoven cloth for a filter in which at least two layers of nonwoven cloths are stacked, a filling rate of the nonwoven cloth on an upper layer side is 0.3 to 0.8, and a filling rate of the nonwoven cloth on a lower layer side is 0.01 to 0.25 to obtain a highly precise filtration filter having good shape retention and an excellent balance between precision of filtration and a filtration life is proposed (Patent Document 2). An objective of the invention of Patent Literature 2 is to filter fine particles such as submicron particles with high precision. According to the invention of Patent Literature 2, by a nonwoven cloth layer having a low filling rate being disposed on the lower layer side of the filter, a minute space is retained on a contact surface between the nonwoven cloth layer and a support material and the nonwoven cloth layer also acts as a cushioning material to improve utilization efficiency and shape retention of the filter.

Further, an objective of the invention of Patent Literature 3 is to provide a filter in which aggregation (bridge) of powder particles is unlikely to occur and the time until a filtration differential pressure is generated is long, that is, a filtration life is long. In Patent Literature 3, a filter in which a filtration layer in the filter having a substrate layer, the filtration layer, and a skin layer is a layer in which layered bodies obtained by stacking at least a through-air nonwoven cloth and a net are wound in multiple layers and which is not pressure-bonded, and an average pore diameter of a nonwoven cloth constituting the substrate layer and the skin layer is larger than an average pore diameter of the through-air nonwoven cloth constituting the filtration layer is proposed.

[Reference List]

[Patent Literature]

Patent Literature 1: Japanese Unexamined Patent Application Publication No. 2010-137121
Patent Literature 2: Japanese Unexamined Patent Application Publication No. 2000-218113
Patent Literature 3: Japanese Unexamined Patent Application Publication No. 2015-97979

[Summary of Invention]

[Technical Problem]

As described above, various improvements have been made for the filter, but a filter having sufficient precision of filtration for high concentration and high viscosity slurry and being capable of long-term filtration has not yet been obtained. Particularly, in the slurry of a lithium secondary battery material, the current situation is that the concentration and the viscosity are increasing, but such slurry contains coarse particles. Therefore, there is a demand for a filter that removes coarse particles in the high viscosity slurry and allows fine particles to pass through reliably. In the slurry of a lithium secondary battery material, a particle diameter of useful fine particles is often about several $\mu$m to 50 $\mu$m.

In view of this situation, an objective of the present invention is to provide a filter that exhibits good precision of filtration even of a fluid containing fine powder particles having a high concentration and high viscosity and that has excellent pressure resistance for enabling filtration over a long period of time.

[Solution to Problem]

In studying to achieve the objective, the inventors found that, since a large load is applied to the filter when the high viscosity slurry passes through the filter, it is necessary for the filter to have pressure resistance for withstanding this load, and in filtration of the high concentration slurry, a rush phenomenon occurs frequently and clogging is likely to occur. The inventors worked on improving the filter with the above as main points of view. Further, the inventors found that the pressure resistance of the filter is improved by employing a nonwoven cloth constituted of fibers having a larger average fiber diameter than that in the related art for a substrate layer and a skin layer of the filter. In general, it is considered that a nonwoven cloth using fibers having a large fiber diameter tends to impair the precision of filtration because a pore diameter thereof is also large. However, in the present invention, fibers having an average fiber diameter of a specific value or more are used. Therefore, when high concentration and high viscosity slurry is filtered, the skin layer can effectively capture the coarse particles, whereby suppressing surface blockage, and a pore shape formed between the fibers of the substrate layer and the fibers of the filtration layer can ensure good liquid permeability. Further, since both the skin layer and the filtration layer have a structure having a filtration function as a whole, classification performance or precision of filtration can be maintained. Further, the inventors found that a depth filter having excellent pressure resistance and a long filtration life can be obtained because the nonwoven cloths are appropriately fused to each other and completed the present invention.

That is, the present invention has the following configuration.

[1] A depth filter including a substrate layer, a filtration layer, and a skin layer in that order,

wherein the substrate layer and the skin layer are layers obtained by winding and thermally fusing a nonwoven cloth configured from fibers having an average fiber diameter of 150 $\mu$m or more,
wherein the filtration layer is a layer obtained by winding a layered body two or more times, the layered body including at least a net and a nonwoven cloth included only in the filtration layer, and
wherein the average fiber diameter of the nonwoven cloth constituting the substrate layer and the average fiber diameter of the nonwoven cloth constituting the skin layer are larger than an average fiber diameter of the nonwoven cloth included only in the filtration layer.

[2] The depth filter according to [1], wherein the nonwoven cloth included only in the filtration layer is at least one selected from the group consisting of a through-air nonwoven cloth and a melt-blown nonwoven cloth.
[3] The depth filter according to [1] or [2], wherein the nonwoven cloth included only in the filtration layer is a through-air nonwoven cloth having an average fiber diameter in a range of 0.1 to 200 $\mu$m.
[4] The depth filter according to any one of [1] to [3], wherein the nonwoven cloth constituting the substrate layer and the nonwoven cloth constituting the skin layer include one or more nonwoven cloths of polyolefin fibers.
[5] The depth filter according to [4], wherein the nonwoven cloth of polyolefin fibers is a melt-blown nonwoven cloth or through-air nonwoven cloth of polyolefin fibers.
[6] The depth filter according to any one of [1] to [5], wherein the net has a mesh size in a range of 1 to 5 mm and an average fiber diameter in a range of 50 to 300 $\mu$m.
[7] The depth filter according to any one of [1] to [6], wherein the fibers of the nonwoven cloth included only in the filtration layer are fused and/or bonded to each other at intersections of the fibers.

[Advantageous Effects of Invention]

According to the present invention, it is possible to provide a filter that has excellent precision of filtration and pressure resistance even for a high concentration and high viscosity slurry, has excellent classification performance for removing coarse particles and allowing fine particles to pass through, and is less likely to cause clogging.

[Brief Description of Drawings]

Fig. 1 shows a cross section of a depth filter according to an example of the present invention.

Fig. 2 shows a filtration life evaluation result of a depth filter according to a comparative example (Comparative Example 1) of the present invention.

Fig. 3 shows a filtration life evaluation result of a depth filter according to an example (Example 1) of the present invention.

Fig. 4 shows a filtration life evaluation result of a depth filter according to an example (Example 2) of the present invention.

[Description of Embodiments]

A depth filter of the present invention includes a substrate layer, a filtration layer, and a skin layer in that order, wherein the substrate layer and the skin layer are layers obtained by winding and thermally fusing a nonwoven cloth configured from fibers having an average fiber diameter of 150 μm or more, wherein the filtration layer is a layer obtained by winding a layered body two or more times, the layered body including at least a net and a nonwoven cloth included only in the filtration layer, and wherein the average fiber diameter of the nonwoven cloth constituting the substrate layer and the average fiber diameter of the nonwoven cloth constituting the skin layer are larger than an average fiber diameter of the nonwoven cloth included only in the filtration layer.

The depth filter of the present invention is characterized in that the substrate layer and the skin layer are layers obtained by winding and thermally fusing a nonwoven cloth configured from fibers having an average fiber diameter of 150 μm or more. Although not limited by a particular theory, it is thought that, according to this characteristic, the skin layer plays a role in capturing coarse particles, a combination of the nonwoven cloths of the substrate layer and the skin layer and the nonwoven cloth of the filtration layer has a pore shape suitable for filtering a high concentration slurry, an optimum flow path is formed in the depth filter, and in the filtration layer, the nonwoven cloth for the substrate layer and the nonwoven cloth included only in the filtration layer are appropriately fused to each other, and thus a filter in which the pressure resistance of the depth filter is improved and the filtration life is long as compared with a case where a nonwoven cloth having a finer fineness is used as the nonwoven cloth for the substrate layer can be obtained.

<Nonwoven cloth that constitutes filtration layer>

The filtration layer of the depth filter of the present invention is configured by winding a layered body two or more times, the layered body including at least a net and a nonwoven cloth included only in the filtration layer and also including a nonwoven cloth for the substrate layer. The nonwoven cloth used only for the filtration layer is not particularly limited as long as desired performance can be obtained, and for example, a through-air nonwoven cloth, a melt-blown nonwoven cloth, a spun-bonded nonwoven cloth, a spun-laced nonwoven cloth, and the like can be used. Among them, it is preferable to use at least one selected from the group consisting of a through-air nonwoven cloth and melt-blown nonwoven cloth. In particular, it is preferable to use a through-air nonwoven cloth because it is bulky and a fiber orientation is also distributed in a thickness direction of the nonwoven cloth (a flow direction of a fluid to be filtered).

The through-air nonwoven cloth is a nonwoven cloth obtained by a hot air bonding process. The hot air bonding process is a method in which a conveyor belt or a rotary drum is provided in an oven, a web is passed through the oven, and suction is performed on one side to enhance a bonding effect and obtain a uniform nonwoven cloth in the thickness direction. The hot air bonding process is also referred to as an air-through method. The through-air nonwoven cloth is also referred to as an air-through nonwoven cloth. In general, the through-air nonwoven cloth is obtained by passing short fibers having crimps through a card machine to form a web, treating the obtained web with hot air, and thermally fusing entangled points between the short fibers. As the short fibers constituting the through-air nonwoven cloth, the short fibers which are fused and/or bonded to each other at intersections of the short fibers to maintain stable performance are preferable. For this reason, thermally fused composite fibers can be preferably used as the short fibers.

The thermally fused composite fibers are not particularly limited, and for example, fibers formed of two or more kinds of components having a melting point difference therebetween can be used. Specifically, composite fibers formed of a high melting point component and a low melting point component can be exemplified. Examples of the high melting point component of the composite fibers include thermoplastic resins such as polypropylene (PP), polyethylene terephthalate (PET), polybutylene terephthalate, polytrimethylene terephthalate, nylon 6, nylon 6,6, and poly-L-lactic acid, and examples of the low melting point component of the composite fibers include thermoplastic resins such as polyethylene (PE) such as low density polyethylene, linear low density polyethylene, high density polyethylene, and ultrahigh molecular weight polyethylene, a polyethylene terephthalate copolymer, poly-DL-lactic acid, and a propylene copolymer. Among them, preferably, the composite fibers are polyolefin fibers in which the high melting point component and the low melting point component are formed of a polyolefin resin such as polypropylene or polyethylene.

The melting point difference between the high melting point component and the low melting point component of the thermally fused composite fibers is not particularly limited, but to widen a processing temperature range of the thermal fusing, the melting point difference is preferably 15 °C or more and more preferably 30 °C or more. Further, a form of the composite is not particularly limited, but a composite form such as a concentric sheath core type, an eccentric sheath core type, a parallel type, a sea island type, or a radial type can be employed. In particular, eccentric sheath core type composite fibers are suitable for giving bulkiness.

The nonwoven cloth included only in the filtration layer may be a single-fiber nonwoven cloth constituted of fibers having a single type, or a mixed-fiber nonwoven cloth including fibers having two or more different types. In the case of a mixed-fiber nonwoven cloth, the types of fibers included in the mixed-fiber nonwoven cloth only have to be two or more as long as the effects of the invention can be obtained, and may be three, four, or more, but two is preferable.

As the fibers constituting the nonwoven cloth included only in the filtration layer, fibers having an average fiber diameter in a range of 0.1 to 200 $\mu$m can be used. The average fiber diameter of the fibers to be used can be appropriately selected according to the properties of the filtrate and the purpose of filtration. In the depth filter of the present invention, the filtration layer is considered to substantially function to capture the particles to be captured contained in the slurry. However, by setting the average fiber diameter in this range, it is considered possible to reliably capture particles to be captured such as coarse particles while passing the fine particles to be collected through.

The average fiber diameter of the nonwoven cloth included only in the filtration layer is smaller than the average fiber diameter of the nonwoven cloth constituting the substrate layer and the skin layer (that is, the average fiber diameter of the nonwoven cloth constituting the substrate layer and the skin layer is larger than the average fiber diameter of the nonwoven cloth included only in the filtration layer). Specifically, for example, as the nonwoven cloth included only in the filtration layer, a nonwoven cloth having an average fiber diameter of 0.1 to 200 $\mu$m, preferably 1 to 180 $\mu$m, and particularly preferably 10 to 130 $\mu$m can be used.

A basis weight of the nonwoven cloth included only in the filtration layer is defined to some extent in relation to a fiber material and a fiber diameter. For example, the nonwoven cloth having a basis weight of 5 to 100 g/m$^2$ can be used. The basis weight of the nonwoven cloth is preferably 20 to 60 g/m$^2$ and more preferably 25 to 55 g/m$^2$. A basis weight of 25 to 55 g/m$^2$ is preferable because a selection range for adjusting a thickness of the filtration layer and filtration performance is widened.

Further, it is also preferable that, in addition to the above-mentioned nonwoven cloth, another type of nonwoven cloth be stacked on the filtration layer. Specifically, for example, a through-air nonwoven cloth, a melt-blown nonwoven cloth, a spun-bonded nonwoven cloth, a spun-laced nonwoven cloth, and the like having an average fiber diameter of 0.1 to 200 $\mu$m can be used. Among them, it is preferable to use a through-air nonwoven cloth or a melt-blown nonwoven cloth having an average pore diameter and an average fiber diameter different from those of other nonwoven cloths for filtration layers.

The thermally fused composite fibers used for the nonwoven cloth included only in the filtration layer may contain a functional agent as long as the effects of the present invention are not impaired, and examples of the functional agent include an antibacterial agent, a deodorant, an antistatic agent, a smoothing agent, a hydrophilic agent, a water repellent agent, an antioxidant, and a weather resistant agent. Further, a surface of each of the thermally fused composite fibers may be treated with a fiber finishing agent, whereby it is possible to impart functions such as hydrophilicity, water repellency, antistatic property, surface smoothness, and abrasion resistance.

<Net>

The filtration layer of the depth filter of the present invention is obtained by winding a net and the above-mentioned one type or two or more types of nonwoven cloths included only in the filtration layer in addition to the nonwoven cloth for the substrate layer, two times or more. The net used for the filtration layer does not affect collection efficiency of the depth filter. The net is used to create gaps between the wound nonwoven cloths, to maintain the shape of the filtration layer, and to maintain and improve the pressure resistance performance. Therefore, it is preferable to use monofilaments having a fiber diameter in a range of 50 to 300 $\mu$m as the net, and it is more preferable to use monofilaments having a fiber diameter in a range of 60 to 280 $\mu$m as the net. Further, the mesh size of the net is preferably 1 to 5 mm, and more preferably 1 to 4 mm. By using the net in this range, the collection efficiency is not affected and the strength of the filter is ensured, and thus it is possible to obtain a filter having a longer filtration life.

The monofilaments constituting the net are not particularly limited, but are preferably formed of a thermoplastic resin, and for example, single constituent fibers, composite fibers, and blended filament fibers can be used for the monofilaments. The thermoplastic resin that can be used for the monofilaments is not particularly limited as long as it is a thermoplastic resin that can be melt-spun, and for example, the thermoplastic resin exemplified for the thermally fused composite fiber can be used. For example, polyethylene, polypropylene, polyester, nylon 6, nylon 6,6, nylon 6,12 and the like can be mentioned, and among them, polypropylene, nylon 6 or nylon 6,6 is particularly preferable. For the monofilaments, one type of these thermoplastic resins may be used, or a mixture of two or more types of these thermoplastic resins may be used. Further, in a case in which the monofilaments are composite fibers, by using a combination of the thermoplastic resins as exemplified in the thermally fused composite fibers, intersections of the monofilaments can be thermally fused to each other by heat treatment, and thus it is preferable that misalignment not occur.

<Configuration of filtration layer>

The filtration layer of the depth filter of the present invention is formed by winding a layered body two or more times, the layered body including at least a net and a nonwoven cloth included only in the filtration layer in addition to a nonwoven cloth for the substrate layer. A stacking order of the net and the nonwoven cloth included only in the filtration layer is not particularly limited, but it is preferable to wind the nonwoven cloth and the net one by one, that is, to alternately wind the nonwoven cloth and the net one layer at a time. The filtration layer thus formed has a structure in which a coarse net is sandwiched between the nonwoven cloth and the nonwoven cloth, and the nonwoven cloths are stacked without being in close contact with each other. In a case in which two or more types of nonwoven cloths are used together as the nonwoven cloth included only in the filtration layer, first one type of nonwoven cloth and a net can be stacked and wound to a predetermined length, and then another type of nonwoven cloth and a net can be stacked and wound to a predetermined length.

The layered body used for the filtration layer may be all thermally fused, but may have a portion that is not thermally fused. When the layered body has a portion that is not thermally fused, the bulkiness of the nonwoven cloth is retained. In addition, "not thermally fused" means that at least a part of the filtration layer is in a form other than a "form integrally cured by the thermal fusion." A part of the filtration layer may be thermally fused for the purpose of improving shape retention of the filter. Further, the portions between the filtration layer and the substrate layer and the portions between the filtration layer and the skin layer may be thermally pressure-bonded, thermally fused, or bonded.

Further, if necessary, in addition to the above-mentioned nonwoven cloth and net, a further nonwoven cloth, net, or the like may be stacked. For example, by inserting a coarse-meshed melt-blown nonwoven cloth in the layered body in addition to the nonwoven cloth and the net and winding the layered body having a three-layer structure, it is possible to improve the shape retention and the collection efficiency of the filtration layer. In a case in which the melt-blown nonwoven cloth is stacked in the filtration layer, it is preferable to use the same melt-blown nonwoven cloth used for the substrate layer and the skin layer.

It is known from the logarithmic transmission law that the collection efficiency is controlled by the thickness of the filtration layer through which the fluid passes, and the thickness of the filtration layer (the winding number of the layered body) can be appropriately selected according to the desired collection efficiency. As the thickness of the filtration layer (the winding number of the layered body) increases, the collection efficiency is improved, and the powder having a smaller particle diameter can be collected.

<Nonwoven cloth for substrate layer>

The nonwoven cloth for the substrate layer is not particularly limited as long as an average fiber diameter thereof is 150 μm or more and is larger than the average fiber diameter of the nonwoven cloth included only in the filtration layer, it can be thermally fused, and the shape retention required as the substrate layer of the depth filter after thermal fusion can be ensured. As the nonwoven cloth for the substrate layer, a melt-blown nonwoven cloth, a through-air nonwoven cloth, a spun-bonded nonwoven cloth, a spun-laced nonwoven cloth and the like can be used.

In a case in which a melt-blown nonwoven cloth is used as the nonwoven cloth for the substrate layer, types of fibers constituting the melt-blown nonwoven cloth and a manufacturing method of the same are not particularly limited, and the known fibers and manufacturing method can be used. For example, it is possible to manufacture the melt-blown nonwoven cloth by melt-extruding a thermoplastic resin, spinning the thermoplastic resin from a melt-blow spinneret, blow-spinning the thermoplastic resin as an ultrafine fiber stream with a high-temperature and high-speed gas, collecting the ultrafine fibers as a web with a collecting device, heat-treating the web, and thermally fusing the ultrafine fibers to each other. As the high-temperature and high-speed gas used in melt-blow spinning, an inert gas such as air or nitrogen gas is usually used. As a temperature of the gas, a range of 200 to 500 °C is generally used, and as pressure of the gas, a range of 0.1 to 6.5 kgf/cm$^2$ is generally used.

The average fiber diameter of the melt-blown nonwoven cloth used as the nonwoven cloth for the substrate layer can be appropriately selected according to the properties of the filtrate and the purpose of filtration, but is larger than the average fiber diameter of the nonwoven cloth included only in the filtration layer. Specifically, for example, the average fiber diameter is preferably 150 to 1000 μm, more preferably 150 to 700 μm, and most preferably 150 to 500 μm. If the average fiber diameter is 150 μm or more, even when a high concentration and high viscosity slurry is filtered, surface blockage is suppressed, liquid permeability is good, mechanical strength of the fibers constituting the melt-blown nonwoven cloth is high, and single thread breakage of the fibers or tearing of the fiber layer is less likely to occur. Further, if the average fiber diameter of the fibers constituting the melt-blown nonwoven cloth is 500 μm or less, it is preferable because the pore shape formed by the nonwoven cloth for the substrate layer and the nonwoven cloth for the filtration layer provides good liquid permeability even for high concentration slurry and the pressure resistance can be obtained. Further, the average fiber diameter of the nonwoven cloth for the substrate layer is preferably smaller than the fiber diameter of the net. Further, it is preferable that the nonwoven cloth for the substrate layer and the nonwoven cloth for the filtration layer be appropriately fused to each other because the pressure resistance is improved in that case.

In a case in which a through-air nonwoven cloth is used as the nonwoven cloth for the substrate layer, types of fibers constituting the through-air nonwoven cloth and a manufacturing method of the same are not particularly limited as long as the fibers have a predetermined average fiber diameter and the effects of the present invention can be obtained, and the known fibers and manufacturing method can be used. In a case in which the through-air nonwoven cloth is used, a specific range of a preferable average fiber diameter is the same as in a case in which the melt-blown nonwoven cloth is used.

The basis weight of the nonwoven cloth for the substrate layer is defined to some extent in relation to the fiber material and the fiber diameter. For example, the nonwoven cloth having a basis weight of 5 to 100 g/m$^2$ can be used. It is more preferable to use the nonwoven cloth having a basis weight of 30 to 60 g/m$^2$. A basis weight in this range is suitable from the viewpoint of adjusting an outer diameter of the filter and adjusting the strength design of the substrate layer.

As the nonwoven cloth for the substrate layer, a nonwoven cloth formed of single constituent fibers, a nonwoven cloth formed of composite fibers, a nonwoven cloth formed of blended filament fibers, and the like can be used. Further, the resin that can be used for the melt-blown nonwoven cloth is not particularly limited as long as it is a thermoplastic resin that can be melt-spun, but, for example, the thermoplastic resin as exemplified in the thermally fused composite fibers can be used, a single thermoplastic resin may be used, and a mixture of two or more kinds of thermoplastic resins may be used. Further, the thermoplastic resin may contain various functional agents as long as the effects of the present invention are not impaired. Specifically, an antibacterial agent, a deodorant, a hydrophilic agent, a water repellent agent, a surfactant, and the like may be contained. Further, the melt-blown nonwoven cloth may be subjected to secondary processing to impart functions as long as the effect thereof is not impaired. Specifically, examples of the secondary processing include a hydrophilic or hydrophobic coating treatment, a chemical treatment for introducing a specific functional group into the surface of ultrafine fibers constituting the melt-blown nonwoven cloth, and a sterilization treatment.

Specifically, examples of the fibers used for the nonwoven cloth for the substrate layer include polyolefin fibers formed of polyolefin resins such as polyethylene (low density polyethylene, linear low density polyethylene, high density polyethylene, and ultrahigh molecular weight polyethylene) and polypropylene (a propylene copolymer and crystalline polypropylene containing propylene as a main component), polyester fibers formed of polyester resins such as polyethylene terephthalate and polybutylene terephthalate, and polyamide fibers formed of polyamide resins such as nylon 6, nylon 6,6, and nylon 6,12.

The substrate layer is mainly a layer for ensuring the strength of the filter and is preferably a layer in which melt-blown nonwoven cloths are stacked and integrated by thermal fusion. The thickness and the winding number of the substrate layer are appropriately set according to the melt-blown nonwoven cloth used, but are not particularly limited as long as the strength of the filter can be ensured and certain filtration performance can be obtained.

<Skin layer>

The skin layer is a layer located on the outermost side of the filter (an upstream side of the filtrate), and the main purpose of the layer is particularly to block aggregates or impurities having a large particle diameter from entering the filtration layer, to protect the filtration layer, and to retain the filter shape.

The skin layer is a layer obtained by winding and thermally fusing a nonwoven cloth configured from fibers having an average fiber diameter of 150 μm or more. The nonwoven cloth used for the skin layer is not particularly limited as long as the average fiber diameter is 150 μm or more, the fibers can be thermally fused, and the effects of the present invention are obtained. A material thereof is not particularly limited, and the same average fiber diameter and material as those exemplified for the nonwoven cloth for the substrate layer can be used. The nonwoven cloth for the skin layer may be the same as or different from the nonwoven cloth for the substrate layer, but it is preferable to use the same nonwoven cloth as the nonwoven cloth for the substrate layer. Specifically, for example, as the nonwoven cloth for the skin layer and the nonwoven cloth for the substrate layer, a melt-blown nonwoven cloth or a through-air nonwoven cloth of the same polyolefin fibers can be used.

The winding number and the thickness of the skin layer are not particularly limited, but if the winding number and the thickness are increased, a problem that a bridge is formed in the skin layer before the filtrate reaches the filtration layer may occur, and thus it is preferable that the skin layer be as thin as possible. For example, it is preferable to wind the melt-blown nonwoven cloth 1 to 5 times, preferably 1 to 2 times and to thermally fuse the wound cloth to form the melt-blown nonwoven cloth from the viewpoint of reducing the formation of bridges.

<Manufacturing method of depth filter>

It is possible to manufacture the depth filter of the present invention by winding the nonwoven cloth for the substrate layer, the nonwoven cloth for the filtration layer and the net, and the nonwoven cloth for the skin layer in that order while stacking them. Specifically, for example, the melt-blown nonwoven cloth which is the nonwoven cloth for the substrate layer is first wound around a columnar iron rod while being thermally fused to form the substrate layer as a core. Subsequently, the through-air nonwoven cloth which is the nonwoven cloth for the filtration layer and the net are inserted in order and wound without being heated to form the filtration layer. Finally, the melt-blown nonwoven cloth which is the nonwoven cloth for the skin layer is wound once or twice and thermally fused to form the depth filter.

The temperature for forming the substrate layer in the above method may be any temperature as long as the nonwoven cloth for the substrate layer is melted and thermally fused at a winding portion (the columnar iron rod). Further, the speed of a manufacturing line is not particularly limited, but, when the filtration layer is formed, the tension applied to the nonwoven cloth is preferably 10 N or less, and it is preferable to wind the nonwoven cloth without applying tension.

The diameter and thickness of the depth filter can be appropriately set according to the desired performance and the properties of the filtrate and are not particularly limited, but, in a case in which the depth filter is, for example, a depth filter used for slurry filtration in a manufacturing process of a lithium secondary battery material, it is possible to make the depth filter as one having an inner diameter of about 23 to 45 mm and an outer diameter of about 60 to 80 mm. It is possible to manufacture such a depth filter by winding the nonwoven cloth for the substrate layer about 0.2 to 20 m, by winding the layered body of the nonwoven cloth for the filtration layer and the net about 0.2 to 8 m, and by winding the skin layer about 0.2 to 7 m, for example.

The filter manufactured as described above is suitably used as a cylindrical filter by being cut into an appropriate size and with end caps attached to both ends thereof.

Further, the above manufacturing method is only an outline, and the known processes such as heat treatment, cooling, chemical treatment, molding, and washing can be carried out as needed in addition to the above processes.

Examples

Hereinafter, the present invention will be described in more detail with examples, but the present invention is not limited thereto.

Measuring methods and definitions of physical property values shown in the examples are as follows.

1) Measuring method of average fiber diameter

From a cross section of the filter photographed with an electron microscope, a length (a diameter) in a direction perpendicular to a length direction of each fiber was measured for 100 fibers, and an arithmetic mean value thereof was taken as an average fiber diameter. This calculation was performed using image processing software "Scion Image" (trade name) of Scion Corporation.

2) Measuring method of basis weight

A weight of the nonwoven cloth cut into 250 mm $\times$ 250 mm was measured, and the weight per unit area (g/m$^2$) was determined and taken as a basis weight.

[Example 1]

(Material)

Nonwoven cloth for skin layer and substrate layer: A melt-blown nonwoven cloth containing crystalline propylene (melting point 165 °C) as a main component, which has a basis weight of 47 g/m$^2$ and an average fiber diameter of 343 $\mu$m, was used.

Nonwoven cloth for filtration layer: A through-air nonwoven cloth formed of eccentric sheath-core type composite fibers (average fiber diameter 31 $\mu$m) of crystalline polypropylene (melting point 165 °C: core)/high density polyethylene (melting point 135 °C: sheath), which has a basis weight of 30 g/m$^2$ and an average pore diameter of 46 $\mu$m, was used. The average pore diameter is a value obtained by measuring four through-air nonwoven cloths stacked.

Net: A net formed of polypropylene monofilaments (average fiber diameter 250 $\mu$m), which has a mesh size of 2.0 mm, was used.

(Manufacturing method of filter)

The core (the iron rod) was preheated to 150 °C, the heating at 150 °C was continued, and in the meantime, the nonwoven cloth for the substrate layer was wound around the core by 7 m. Subsequently, the insertion of the nonwoven cloth for the filtration layer and the net was started. The insertion length of the nonwoven cloth for the filtration layer and the net was 2 m, and the nonwoven cloth for the filtration layer and the net were wound together with the nonwoven cloth for the substrate layer. At this time, the first 1 m was thermally fused by being heated at a heater output of 7.8 kW and 150 °C. The remaining 1 m was wound without being heated at a heater output of 0 kW and without being thermally fused to form the filtration layer. Subsequently, the melt-blown nonwoven cloth for the substrate layer was wound by 1 m while being thermally fused by being heated with a heater output of 7.8 kW to form the skin layer, and thus to manufacture the cylindrical depth filter.

[Example 2]

(Material)

Nonwoven cloth for skin layer and substrate layer: A melt-blown nonwoven cloth containing crystalline propylene (melting point 165 °C) as a main component, which has a basis weight of 47 g/m$^2$ and an average fiber diameter of 182 $\mu$m, was used.

Nonwoven cloth for filtration layer: A through-air nonwoven cloth formed of eccentric sheath-core type composite fibers (average fiber diameter 31 $\mu$m) of crystalline polypropylene (melting point 165 °C: core)/high density polyethylene (melting point 135 °C: sheath), which has a basis weight of 30 g/m$^2$ and an average pore diameter of 46 $\mu$m, was used. The average pore diameter is a value obtained by measuring four through-air nonwoven cloths stacked.

Net: A net formed of polypropylene monofilaments (average fiber diameter 250 $\mu$m), which has a mesh size of 2.0 mm, was used.

(Manufacturing method of filter)

The core (the iron rod) was preheated to 150 °C, the heating at 150 °C was continued, and in the meantime, the nonwoven cloth for the substrate layer was wound around the core by 6.5 m. Subsequently, the insertion of the nonwoven cloth for the filtration layer and the net was started. The insertion length of the nonwoven cloth for the filtration layer and the net was 2 m, and the nonwoven cloth for the filtration layer and the net were wound together with the melt-blown nonwoven cloth for the substrate layer. At this time, the first 1 m was thermally fused by being heated at a heater output of 7.8 kW and 150 °C. The remaining 1 m was wound without being heated at a heater output of 0 kW and without being thermally fused to form the filtration layer. Subsequently, the melt-blown nonwoven cloth for the substrate layer was wound by 1 m while being thermally fused by being heated with a heater output of 7.8 kW to form the skin layer, and thus to manufacture the cylindrical depth filter.

[Comparative Example 1]

(Material)

Nonwoven cloth for skin layer and substrate layer: A melt-blown nonwoven cloth containing propylene as a main component, which has a basis weight of 50 g/m$^2$ and an average fiber diameter of 107 $\mu$m, was used. Specifically, a mixed fiber melt-blown nonwoven cloth having a mixed fiber ratio of the propylene copolymer (melting point 135 °C) and the crystalline polypropylene (melting point 165 °C) of 1: 1 was used. The average fiber diameter is an average fiber diameter in the mixed nonwoven cloth.

Nonwoven cloth for filtration layer: A through-air nonwoven cloth formed of eccentric sheath-core type composite fibers (average fiber diameter 31 $\mu$m) of polypropylene/polyethylene, which has a basis weight of 30 g/m$^2$ and an average pore diameter of 46 $\mu$m, was used. The average pore diameter is a value obtained by measuring four through-air nonwoven cloths stacked.

Net: A net formed of polypropylene monofilaments (average fiber diameter 250 $\mu$m), which has a mesh size of 2.0 mm, was used.

(Manufacturing method)

The cylindrical depth filter was manufactured by the same method as in Example 1 except that the above-mentioned nonwoven cloth for the substrate layer was used instead of the nonwoven cloth for the substrate layer in Examples 1 and 2.

<Capturing efficiency>

For the depth filters of Examples 1 and 2 and Comparative Example 1, the collection efficiency was measured as initial collection performance according to the following test powder and method.

As the test powder, seven types described in JIS Z 8901 test powder were used.

A test fluid in which seven types of powders of JIS were added to water at a speed of 0.3 g/min was passed through the filter at a flow rate of 30 L/min, the test fluid flowed from the skin layer to the substrate layer, and the number of particles before and after passing through the filter was measured (Reference: Filter guidebook for users, The Association of Liquid Filtration and Purification Industry).

The number of particles was measured using a particle sensor (KS-63, manufactured by Rion Co., Ltd.) and a particle counter (KL-11, manufactured by Rion Co., Ltd.).

The collection efficiency was calculated by the following definition expression.

$$\text{Collection efficiency (\%)} = (1 - \text{Number of particles having particle diameter x}$$
$$\mu\text{m after passing through filter/Number of particles having particle diameter x } \mu\text{m before}$$
$$\text{passing through filter}) \times 100$$

Table 1 shows measurement results of the collection efficiency.

[Table 1]

| | | Particle diameter (μm) | | | | |
|---|---|---|---|---|---|---|
| | | 30 | 50 | 60 | 80 | 100 |
| Collection efficiency (%) | Example 1 | 27 | 71.4 | 85.8 | 96.1 | 100 |
| | Example 2 | 42.1 | 82.8 | 91.9 | 98.2 | 100 |
| | Comparative Example 1 | 57.2 | 91.2 | 97.2 | 99.7 | 100 |

As shown in Table 1, in the filter of Example 1, 100% of particles of 100 μm or more were collected, and the collection efficiency of particles of 30 μm was less than 30% (that is, more than half of the particles were passed therethrough). In the filter of Example 2, 100% of particles of 100 μm or more were collected, and the collection efficiency of particles of 30 μm was less than 50% (that is, more than half of the particles were passed therethrough). On the other hand, in the filter of Comparative Example 1, 100% of particles of 100 μm or more were collected, and the collection efficiency of particles of 30 μm was 57.2% (that is, more than half of the particles were collected). For the collection efficiency of particles of 50 μm, it was 71.4% in Example 1 and 89.2% in Example 2, whereas it was 91.2% in Comparative Example 1, which is a higher value. The result is that the filters of Examples 1 and 2 can reliably collect the coarse particles to be removed and can more reliably pass the small particles to be passed therethrough than the filter of Comparative Example 1, that is, it is shown that clogging is less likely to occur and the classification performance is excellent.

<Pressure resistance>

For the depth filters of Examples 1 and 2 and Comparative Example 1, a wrap film was wrapped around the entire surface thereof for covering, and the filter surface was sealed to prepare a sample for pressure resistance test.

This filter was attached to a housing, water was fed by a pump, and a flow path was filled with water. Next, the pressure in the system was increased by 0.02 MPa from 0.1 MPa by the increase of a flow rate of the pump, the increased pressure was held for 1 minute, and deformation of the filter was visually confirmed to measure limit pressure at which the filter was deformed.

The results of the pressure resistance test are shown in Table 2.

[Table 2]

| | Pressure resistance |
|---|---|
| Example 1 | 7.0 |
| Example 2 | 7.0 |

(continued)

|  | Pressure resistance |
|---|---|
| Comparative Example 1 | 3.6 |

<Filtration life>

For the depth filters of Examples 1 and 2 and Comparative Example 1, a differential pressure change before and after passing through the filter with respect to a cumulative powder addition amount was measured according to the following powder and method.

As the test powder, seven types described in JIS Z 8901 test powder were used.

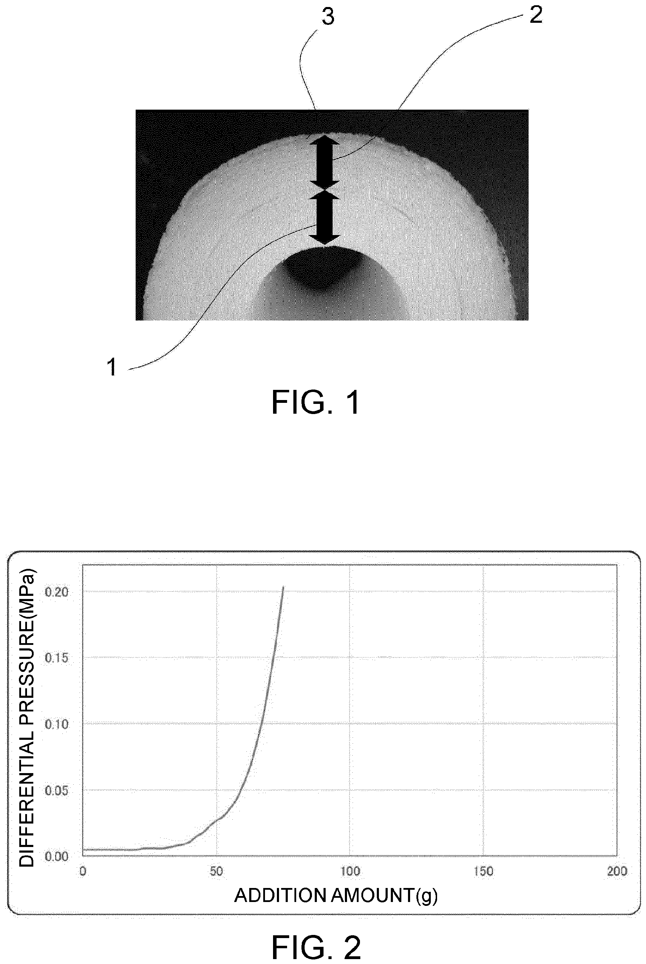

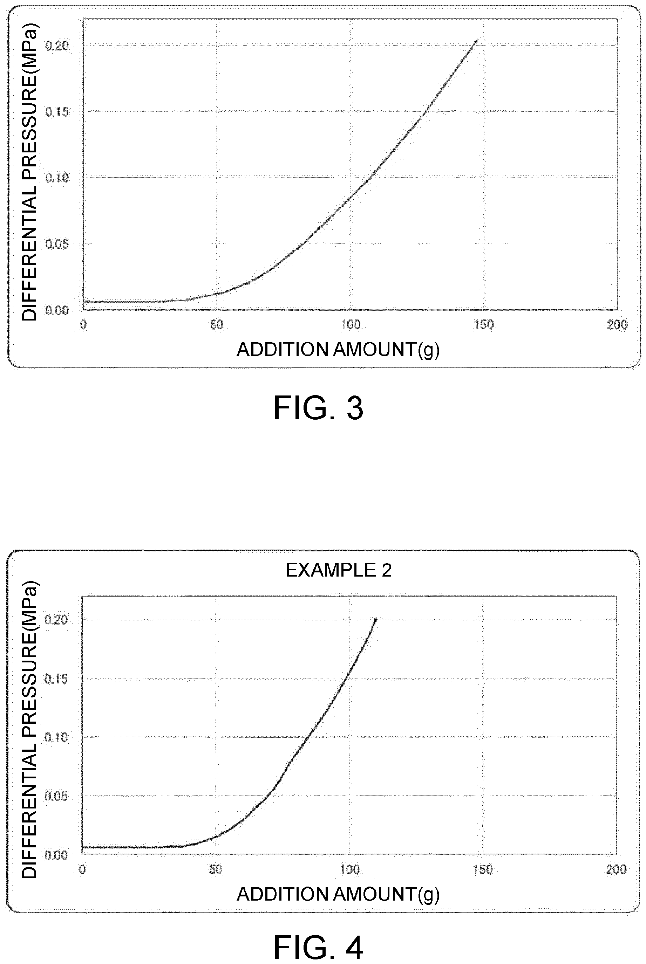

The test fluid in which the test powders were added to water having a circulating water amount of 30 L/min at a speed of 0.3 g/min was passed through the filter, and the pressure difference change before and after passing through the filter with respect to the cumulative powder addition amount was tracked (Reference: Filter guidebook for users, The Association of Liquid Filtration and Purification Industry). The results are shown in Figs. 2 to 4.

(Examination)

It was found that the filters of Examples 1 and 2 had high pressure resistance during filtration. On the other hand, in the pressure resistance test of Comparative Example 1, it was found that the filter was crushed at a lower pressure. It is considered that this is because the filters of Examples 1 and 2 include the substrate layer having a nonwoven cloth formed of thick and durable fibers, whereas the filter of Comparative Example 1 does not include thick fibers in the substrate layer. The high pressure resistance makes it possible to filter slurry with a higher viscosity for a long period of time.

Further, from the results of the filtration life test, in Examples 1 and 2, since the pressure rise of the filter is gradual at the time of filtration, the filter can be used for a long period of time and a liquid permeating amount of the slurry can be increased. On the other hand, in Comparative Example 1, the pressure increased sharply as the slurry was passed therethrough. As a result, the liquid permeating amount of the slurry was small. Therefore, it was found that the filters of Examples 1 and 2 were excellent in filtration life as compared with that of Comparative Example 1 which is a product of the related art.

Further, it was confirmed that, since the filters of Examples 1 and 2 can remove fine particles equivalent to 100 $\mu$m and allow most of desired particles of 50 $\mu$m or less to pass therethrough, clogging is less likely to occur than the filter of Comparative Example 1, and the classification performance is improved.

From these results, it was found that the depth filters of Examples 1 and 2 according to the present invention are excellent in precision of filtration, filtration life, and pressure resistance.

Fig. 1 shows a cross section of the depth filter according to the embodiment of the present invention. In the depth filter of Fig. 1, the substrate layer 1 is a layer formed by winding the melt-blown nonwoven cloth. The filtration layer 2 is a layer formed by stacking and winding the through-air nonwoven cloth, the melt-blown nonwoven cloth, and the net. The skin layer 3 is a layer formed by winding the melt-blown nonwoven cloth.

[Industrial Applicability]

The depth filter of the present invention has high pressure resistance in filtration of the slurry having various particle diameters because a nonwoven cloth including thick fibers having an average fiber diameter of 150 $\mu$m or more is disposed in the skin layer and the substrate layer. Further, the depth filter of the present invention is suitably used as a filtration filter used to obtain fine particles having a particle diameter of a certain level or more by removing aggregates or impurities from the suspension, the slurry, and the gel-like fluid containing fine particles (powders) at a low concentration to a high concentration (10 ppm to 70%) and allows a filtration target to be passed more therethrough because the filtration life is long. The depth filter of the present invention is suitably used as a filter for filtering a slurry in a manufacturing process of a lithium secondary battery, and an industrial filter for filtering abrasive slurry, paint slurry, pigment dispersion, and a fluid containing a filler, for example, a liquid or fluid containing an encapsulant, an adhesive, a film composition, and a coating agent.

[Reference Signs List]

1     Substrate layer
2     Filtration layer
3     Skin layer

**Claims**

1. A depth filter comprising a substrate layer, a filtration layer, and a skin layer in that order,

   wherein the substrate layer and the skin layer are layers obtained by winding and thermally fusing a nonwoven cloth configured from fibers having an average fiber diameter of 150 $\mu$m or more,
   wherein the filtration layer is a layer obtained by winding a layered body two or more times, the layered body including at least a net and a nonwoven cloth included only in the filtration layer, and
   wherein the average fiber diameter of the nonwoven cloth constituting the substrate layer and the average fiber diameter of the nonwoven cloth constituting the skin layer are larger than an average fiber diameter of the nonwoven cloth included only in the filtration layer.

2. The depth filter according to claim 1, wherein the nonwoven cloth included only in the filtration layer is at least one selected from the group consisting of a through-air nonwoven cloth and a melt-blown nonwoven cloth.

3. The depth filter according to claim 1 or 2, wherein the nonwoven cloth included only in the filtration layer is a through-air nonwoven cloth having an average fiber diameter in a range of 0.1 to 200 $\mu$m.

4. The depth filter according to any one of claims 1 to 3, wherein the nonwoven cloth constituting the substrate layer and the nonwoven cloth constituting the skin layer include one or more nonwoven cloths of polyolefin fibers.

5. The depth filter according to claim 4, wherein the nonwoven cloth of polyolefin fibers is a melt-blown nonwoven cloth or a through-air nonwoven cloth.

6. The depth filter according to any one of claims 1 to 5, wherein the net has a mesh size in a range of 1 to 5 mm and an average fiber diameter in a range of 50 to 300 $\mu$m.

7. The depth filter according to any one of claims 1 to 6, wherein the fibers of the nonwoven cloth included only in the filtration layer are fused and/or bonded to each other at intersections of the fibers.

FIG. 1

FIG. 2

FIG. 3

FIG. 4

## INTERNATIONAL SEARCH REPORT

| | International application No. |
|---|---|
| | PCT/JP2020/013004 |

**A. CLASSIFICATION OF SUBJECT MATTER**

Int. Cl. B01D39/16(2006.01)i, B32B5/26(2006.01)i, B32B27/02(2006.01)i, B32B27/32(2006.01)i, D04H1/4282(2012.01)i, D04H3/007(2012.01)i, D04H3/073(2012.01)i, D04H3/16(2006.01)i
FI: B01D39/16 A, B01D39/16 D, B01D39/16 E, D04H3/007, D04H3/073, D04H3/16, B32B5/26, B32B27/02, B32B27/32 E, D04H1/4282

According to International Patent Classification (IPC) or to both national classification and IPC

**B. FIELDS SEARCHED**

Minimum documentation searched (classification system followed by classification symbols)

Int. Cl. B01D39/16, B32B5/26, B32B27/02, B32B27/32, D04H1/4282, D04H3/007, D04H3/073, D04H3/16

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-126721 A (JNC CORP.) 16 August 2018, claims, paragraphs [0013]-[0042], examples | 1-7 |
| A | JP 2015-97979 A (JNC CORP.) 28 May 2015, entire text, all drawings | 1-7 |
| A | JP 2000-279727 A (CHISSO CORP.) 10 October 2000, entire text, all drawings | 1-7 |
| A | WO 2018/021426 A1 (JNC CORP.) 01 February 2018, entire text, all drawings | 1-7 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29.05.2020 | 09.06.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application No. |
| --- |
| PCT/JP2020/013004 |

| Patent Documents referred to in the Report | Publication Date | Patent Family | Publication Date |
| --- | --- | --- | --- |
| JP 2018-126721 A | 16.08.2018 | (Family: none) | |
| JP 2015-97979 A | 28.05.2015 | (Family: none) | |
| JP 2000-279727 A | 10.10.2000 | US 7033497 B1 entire text, all drawings | |
| WO 2018/021426 A1 | 01.02.2018 | US 2019/0160406 A1 entire text, all drawings | |

Form PCT/ISA/210 (patent family annex) (January 2015)

**EP 3 950 088 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010137121 A
- JP 2000218113 A
- JP 2015097979 A

**Non-patent literature cited in the description**

- The Association of Liquid Filtration and Purification Industry